# EUROPÄISCHE PATENTANMELDUNG

(11) **EP 0 560 028 A1**
(43) Veröffentlichungstag der Anmeldung: **15.09.1993**
(21) Anmeldenummer: 93101044.1
(22) Anmeldetag: 23.01.1993
(51) Int. Cl.: H04N 7/14

(54) **Bildfernsprechkonferenztisch für einen Videokonferenzteilnehmer**

(30) Priorität: 05.03.1992 CH 703/92
(71) Anmelder: USM U. SCHAERER SOEHNE AG, CH-3110 Münsingen (CH)
(72) Erfinder: Graf, Rudolf, CH-3510 Konolfingen (CH)
(74) Vertreter: Keller, René, Dr.

(57) **Zusammenfassung**

Ein Bildfernsprechkonferenztisch für einen Videokonferenzteilnehmer mit Halteeinrichtungen (**4**, **19**) für wenigstens ein Bildwiedergabe- (**3**), Bildaufnahme- (**20**), Tonwiedergabe- und Tonaufnahmegerät ist als eine C-förmige, den Konferenzteilnehmer (**2**) teilweise umschließende Tischanordnung (**1a**, **1b**, **1c**), an dem die Halteeinrichtungen (**4**, **19**) angeordnet sind, ausgebildet. Das Bildwiedergabegerät (**3**) kann von einem transparenten Tischplattenbereich (**7**) überdeckt sowie schwenkbar und in der Höhe verstellbar angeordnet werden. Das Bildaufnahmegerät (**20**) ist bevorzugt am Mittelteil (**1b**) der C-förmigen Tischanordnung mit einer Halteeinrichtung (**19**) schwenkbar, in der Höhe und/oder horizontal verstellbar gehalten.

## Beschreibung

Die Erfindung betrifft einen Bildfernsprechkonferenztisch gemäß dem Oberbegriff des Patentanspruchs 1.

Bildfernsprechkonferenztische werden bei Videokonferenzen mit räumlich entfernten Konferenzteilnehmer verwendet. Bei einer Videokonferenz sind sowohl der Ton wie auch optische Abbildungen, insbesondere das Konterfei der Konferenzteilnehmer zu übertragen. Jeder Konferenzteilnehmer wird mit einem Bildaufnahmegerät (TV-Kamera) aufgenommen und dann einzeln oder Zu mehreren auf einem Bildwiedergabegerät des anderen räumlich entfernten Teilnehmer wiedergegeben.

Aus der **DE-OS 33 44 401** ist ein als Pult ausgebildeter, gattungsgemäßer Bildfernsprechkonferenztisch für einen Videokonferenzteilnehmer bekannt. Der bekannte Konferenztisch hat ein pultförmiges Standgehäuse, an dem ein Konferenzteilnehmer steht. Im Fuß des Standgehäuses ist an der dem vortragenden Konferenzteilnehmer abgewandten Rückseite ein Lautsprecher und die Bildfläche eines Bildwiedergabegeräts angeordnet. Über dem Bildwiedergabegerät befindet sich direkt unter der Pultfläche ein Bildaufnahmegerät mit wählbarem Strahlengang, so daß eine Aufnahme der in einem Auditorium vor dem Pult befindlichen Zuhörer sowie eine Aufnahme des am Pult stehenden Konferenzteilnehmers bzw. dessen auf der Pultfläche liegenden Unterlagen möglich ist. Die Auswahl des Strahlengangs wird mittels umschaltbarer Spiegel erreicht.

Bei der bekannten Bildfernsprechvorrichtung ist das auf dem Bildwiedergabegerät dargestellte Bild nicht von dem am Pult stehenden Konferenzteilnehmer einsehbar.

Ein weiterer, nicht gattungsgemäßer Bildfernsprechkonferenztisch ist aus der **EP-B 0 218 963** bekannt. Er hat vier Tischelemente und vier Füllelemente, die zu einer ringförmigen Anordnung derartig zusammengestellt sind, daß jeder Konferenzteilnehmer in ein Bildwiedergabegerät blickt, dessen Bildfläche sich an der Rückseite des gegenübersitzenden Konferenzteilnehmers befindet. In der Mitte jedes Tischelements ist ein Bildaufnahmegerät zur Aufnahme des jeweils gegenübersitzenden Konferenzteilnehmers angeordnet.

Bei diesem Konferenztisch ist zwar im Gegensatz zum gattungsgemäßen Konferenztisch eine Betrachtung des auf dem Bildwiedergabegerät Dargestellten möglich, es werden jedoch hierzu mindestens zwei einander gegenüberstehende Konferenztische benötigt, was einen großen Raumbedarf für deren Aufstellung bedingt.

Aus der **EP-A 0 008 350** ist ein weiterer nicht gattungsgemäßer Konferenztisch bekannt. Bei diesem sind alle elektronischen Steuergerät sowie die Mikrofone, Bildschirm- und Bildaufnahmegeräte in einer zentralen Säule untergebracht. Um diese herum sind sektorförmige Tischplattenelemente als Arbeitstischplatten für den jeweiligen Konferenzteilnehmer angeordnet.

Bei dieser dritten bekannten Bildfernsprechvorrichtung werden die Nachteile der ersten und zweiten Vorrichtung vermieden, indem eine kompakte Bildfernsprechvorrichtung mit abnehmbaren Tischplatten vorgestellt wird. Durch diese kompakte Ausgestaltung soll eine optimale Bilderfassung des übertragenen Bildes durch den Konferenzteilnehmer sowie dessen optimale Aufnahme erreicht werden. Dabei geht jedoch die Kompaktheit der Vorrichtung auf Kosten der für den einzelnen Konferenzteilnehmer zur Verfügung stehenden Arbeitsfläche.

Bei den drei bekannten Bildfernsprechvorrichtungen ist der Aufnahmebereich des Bildaufnahmegeräts vorgegeben bzw. festgelegt und damit auch der Ort (Sitzplatz) des aufzunehmenden Konferenzteilnehmers auf einen schmalen Raumbereich festgelegt. Ein wahlweises Umschalten auf mehrere Ort ist lediglich durch Umschalten des Strahlengangs in der DE-OS 33 44 401 beschreiben.

Der Erfindung liegt die Aufgabe zugrunde, einen Bildfernsprechkonferenztisch für einen Konferenzteilnehmer zu schaffen, der ein übersichtliches und ergonomisches Arbeiten auch unter Verwendung einer Vielzahl von Arbeitsdokumenten bei guten Bildaufnahme- und -wiedergabemöglichkeiten gewährleistet. Die Aufgabe wird durch die Patentansprüche gelöst.

Durch die gegenüber der in der EP-A 0 008 350 und der EP-B 0 218 963 gegensätzliche Ausgestaltung des Arbeitsplatzes mit einem C-förmig gestalteten Tisch, von dem der Konferenzteilnehmer teilweise umrundet wird, ergibt sich eine große und übersichtliche Arbeitsfläche bei optimalen Bedingungen für die bildtechnische Übermittelung der Bildes des Konferenzteilnehmers sowie wahlweise für dessen Dokumente, wobei der aufzunehmende Konferenzteilnehmer an jedem Ort der gesamten C-förmigen Tischplatte arbeiten kann.

Da das Bildwiedergabegerät im Gegensatz zu den Bildwiedergabegeräten des Stands der Technik schwenkbar und in der Höhe verstellbar angeordnet werden kann, ergibt sich weiterhin die Möglichkeit den Arbeitskomfort und damit die Konferenzeffizienz zu erhöhen.

Wird nun, wie in einer bevorzugten Ausführungsform geschehen, ein Tischplattenbereich der C-förmigen Tischanordnung in transparentem Material ausgebildet und die Bildfläche des verstellbaren Bildwiedergabegeräts unterhalb dieser transparenten Fläche angeordnet, so ist die Bildfläche nicht nur vor mechanischer Beschädigung geschützt, sondern es können Dokumente neben oder über die Bildfläche zum Vergleich mit auf der Bildfläche dargestellten Abbildungen gelegt werden.

Durch eine bevorzugt vor der Bildfläche, d.h. zwischen der Bildfläche und dem Konferenzteilnehmer angeordnete Ablagefläche ist eine weitere Arbeitserleichterung geschaffen worden, da hier z. B. Schreib- und Zeichenutensilien sowie auch Akten und Dokumente griffbereit abgelegt werden können.

Eine bevorzugte Anordnung des Bildwiedergabegeräts in einem der Schenkel der C-förmigen Tischanordnung ermöglicht eine optimale Anordnung der oben erwähnten verstellbaren Halteeinrichtung für das Bildwiedergabegerät. Wird dieser Tischteil gegenüber dem Mittelteil des Tisches verschiebbar ausgebildet, ist auch hier eine weitere individuelle Einstellmöglichkeit gegeben, um eine optimales und auch effizientes Arbeiten bei der Videokonferenz zu ermöglichen.

Da das Bildaufnahmegerät am Mittelteil des Tisches schwenkbar, in der Höhe und/oder horizontal verstellbar angeordnet werden kann, ist es möglich das Gerät immer so anzuordnen, daß der Konferenzteilnehmer, gleichgültig wo er sich an der C-förmigen Tischanordnung gerade befindet, optimal aufgenommen wird. Zusammen mit der Verstellbarkeit des Bildwiedergabegeräts ist somit, falls gewünscht, auch der "Augenkontakt" mit dem anderen bzw. den anderen räumlich entfernten Konferenzteilnehmer ohne weiteres herstellbar. Auch können mit dem verstellbaren Bildaufnahmegerät Dokumente von der Tischplatte aus optimal aufgenommen und übermittelt werden.

Die Anordnung der zur Übertragung und Bildauswahl notwendigen elektrischen Steuereinrichtungen in dem anderen das Bildwiedergabegerät nicht aufweisenden Schenkel der Tischanordnung in unmittelbarer Reichweite des Konferenzteilnehmers erlaubt ein optimales, einfaches und schnelles Ein- und Verstellen gewünschter Parameter.

Im folgenden wird ein Beispiel der erfindungsgemäßen Vorrichtung anhand der Zeichnungen näher erläutert. Es zeigen:
- Fig. 1: eine perspektivische Darstellung eines Bildfernsprechkonferenztisches, wobei hier, um die Figur nicht zu überladen, das Bildaufnahmegerät nicht dargestellt ist,
- Fig. 2: eine Draufsicht auf den in **Figur 1** dargestellten Konferenztisch, wobei hier das in **Figur 1** nicht dargestellte Bildaufnahmegerät gezeigt ist,
- Fig. 3: eine Seitenansicht in der in **Figur 2** gezeigten Blickrichtung III auf eine Anordnung eines Bildwiedergabegeräts im Konferenztisch, wobei die Bildfläche des Bildwiedergabegeräts im Gegensatz zur Darstellung in den **Figuren 1** und **2** in eine horizontale Lage geschwenkt dargestellt ist, und
- Fig. 4: eine zu **Figur 3** analoge Darstellung des Bildwiedergabegeräts in einer aus der horizontalen Stellung herausgeschwenkten und in der Höhe verstellten Lage sowie eine in der Höhe verstellte Ablage vor dem Bildwiedergabegerät. Der Maßstab gegenüber **Figur 3** ist verkleinert.

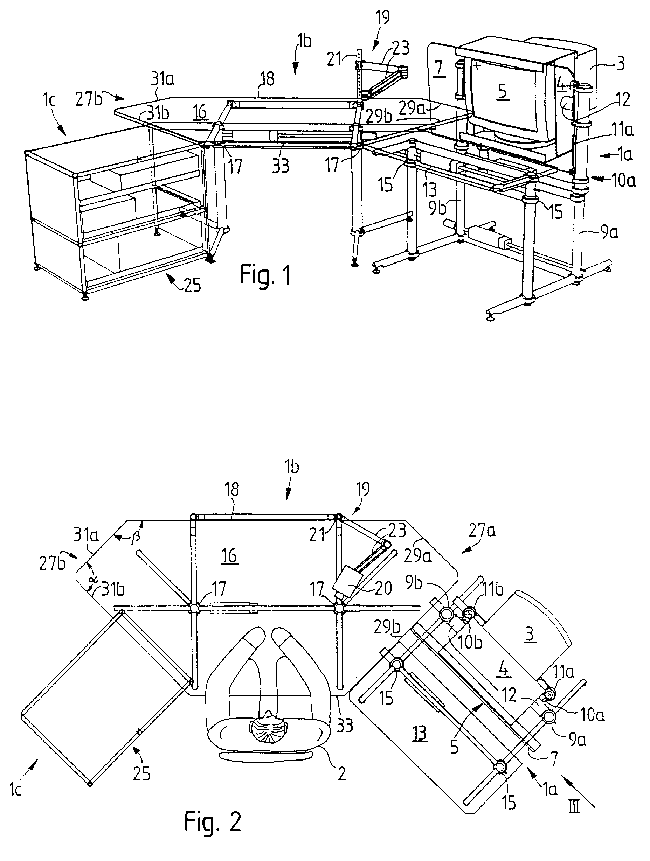

Der in **Figur 1** in einer perspektivischen Ansicht und in einer Draufsicht in **Figur 2** dargestellte Bildfernsprechkonferenztisch hat eine aus drei Einzeltischen **1a**, **1b** und **1c** bestehende, C-förmige Tischanordnung. Wobei unter einer C-förmigen Form auch ein "stilisiertes" "C" verstanden wird, welches z. B. der Längsschnittkontur eines Walmdachs entsprechen würde.

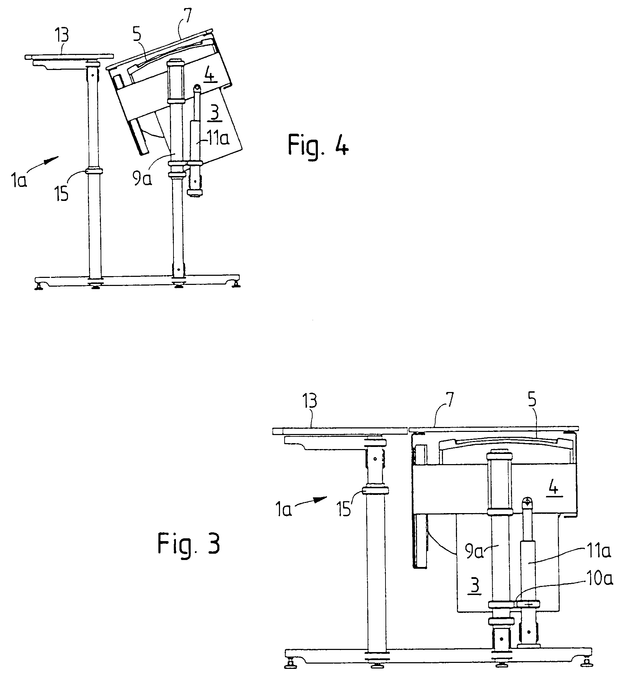

Der vom Konferenzteilnehmer **2** rechte, den rechten Schenkel der C-förmigen Tischanordnung bildende Tisch **1a** weist ein mit einer Halteeinrichtung **4** gehaltenes Bildwiedergabegerät **3** auf. Das Bildwiedergabegerät **3**, welches in den **Figuren 1** und **2** mit einer vertikal stehenden Bildfläche **5**, in **Figur 3** mit einer horizontal liegenden Bildfläche **5** und in **Figur 4** mit einer geneigten Bildfläche **5** dargestellt ist, ist mit einer transparenten Platte **7** überdeckt. Als transparentes Material der Überdeckung wurde Glas gewählt, da es kratzfest ist. Anstelle von Glas können jedoch auch andere transparente Materialien verwendet werden. Die Glasplatte **7** ist in ihrer Breite um eine Toleranz größer als die Höhe des Bildwiedergabegeräts **3** und steht links und rechts über die Bildfläche **5** etwa um ein Drittel der Breite des Bildwiedergabegeräts **3** hinaus. Die gesamte Breite des Glasplatte **7** ist so gewählt, daß neben der Bildfläche **5** ausreichend Platz für eine Ablage von Dokumenten bleibt.

Das Bildwiedergabegerät **3** ist mit Hilfe einer an der Halteeinrichtung **4** angeordneten, paarigen Hubeinrichtung **9a** und **9b** beidseits in der Höhe verstellbar und mit einer weiteren, mit der paarigen Hubeinrichtung **9a** und **9b** durch paarige Verbindungselemente **10a** und **10b** verbundene als Schwenkeinrichtung wirkenden paarigen Hubeinrichtung **11a** und **11b** um eine horizontale Achse **12** schwenkbar.

Der vordere, dem Konferenzteilnehmer **2** zugewandte Teil des Tisches **1a** ist mit einer von der Glasplatte **7** getrennten Ablagefläche **13** abgedeckt. Die Ablagefläche **13** liegt auf Verstellvorrichtungen **15** aufweisenden Tragelementen. Mit den Verstellvorrichtungen **15** ist eine Höhenverstellung der Ablagefläche **13** möglich, wie in **Figur 4** dargestellt.

Die auf holmenartigen Tragelementen ruhende Tischplatte **16** des Mittelteils **1b** der C-förmigen Tischanordnung ist durch eine weitere Verstelleinrichtung **17** in der Höhe verstellbar. An der dem Konferenzteilnehmer **2** abgewandten Seite **18** des Tisches **1b** ist im rechten Tischbereich eine Halteeinrichtung **19** für ein Bildaufnahmegerät **20** zur Aufnahme des Konferenzteilnehmers **2** bzw. dessen auf den Tischplatten ausgelegten, nicht dargestellten Dokumenten angeordnet. Die Halteeinrichtung **19** hat einen am Tisch **1b** befestigten Haltestab **21**, an dem ein in der Höhe verstellbarer, gelenkiger Schwenkarm **23**, der an seinem vorderen Ende das Bildaufnahmegerät **20** trägt, angeordnet ist. Mit dem gelenkigen Schwenkarm **23** kann die horizontale Lage des Bildaufnahmegeräts **20** verändert werden. Das Bildaufnahmegerät **20** ist am Ende des Schwenkarms **23** sowohl um seine horizontale wie auch um seine vertikale Achse selbsthemmend schwenkbar gehalten.

Ein Tonwiedergabegerät ist bevorzugtermaßen im Bildwiedergabegerät **3** integriert und nicht explicit dargestellt. Ein Mikrofon für die Tonaufnahme ist ebenfalls nicht dargestellt und wird bevorzugtermaßen zusammen mit dem Bildaufnahmegerät **20** angeordnet oder dem Konferenzteilnehmer **2** als drahtloses Mikrofon angesteckt.

Eine elektrische Steuereinrichtung **25**, welche auch die Stromversorgung für die verwendeten Geräte enthalten kann, ist in dem auf der linken Seite der C-förmigen Tischanordnung angebrachten Tisch **1c** untergebracht.

Die Formgebung der Tischplatten der einzelnen Tische **1a**, **1b** und **1c** der Tischanordnung ist derart gewählt, daß bei aneinander gestellten Tischen obige C-förmige Tischanordnung gebildet wird. Die Tischplatte des Tisches **1c** ist rechteckig ausgebildet. Die Abdeckung des Tisches **1a**, gebildet aus der Glasplatte **7** und der Ablage **13**, ist ebenfalls rechteckig und annähernd quadratisch. Die Tischplatte des Tisches **1b** ist sechsseitig, wobei immer zwei gegenüberliegende Seiten zueinander parallel angeordnet sind. Die beiden Tischseitenkanten **27a** und **27b** bestehen aus jeweils zwei Teilseitenkanten **29a** und **29b** bzw. **31a** und **31b**, welche annähernd einen rechten Winkel α miteinander bilden. Die Winkel β der Teilseitenkanten **29a** und **31a** sowie **29b** und **31b** mit der dem Konferenzteilnehmer **2** benachbarten **33** bzw. der von ihn entfernten Tischkante **18** sind gleich und etwa 135°.

Als Material für die Tischplatten der Tische **1a**, **1b** und **1c** wird bevorzugt Glas verwendet. Hierdurch erhält der Bildfernsprechkonferenztisch ein klares Aussehen. An den Holmen der Tischkonstruktion verlegte elektrische, nicht dargestellte Kabel für die Geräte stören das von dem Bildaufnahmegerät **20** aufgenommene Bild keineswegs, da es hauptsächlich auf den Konferenzteilnehmer **2** oder dessen Dokumente gerichtet wird. Da ferner der Winkel der optischen Achse der Aufnahmeoptik des Bildaufnahmegerätes **20** mit der Glasoberfläche spitz ist, ist der Lichtreflexionsgrad hoch, so daß unterhalb der Glasplatten liegende Elemente mit allzu lichtstark abgebildet werden und damit auch in der Bildwiedergabe am entfernten Konferenzort nicht besonders hervortreten.

Anstelle elektrische Kabel außen an den Tischholmen zu befestigen, können sie auch innerhalb der Holme unter Verwendung entsprechender Kupplungselemente gezogen werden.

Wie ferner aus den **Figuren 1** bis **4** ersichtlich ist, wird für die Tischkonstruktion eine vom Aussehen her lockere Holmenkonstruktionsart gewählt, welche einerseits eine gute Beinfreiheit für den Konferenzteilnehmer **2** gewährleistet und andererseits auch eine hohe Tischstabilität erbringt.

Bei den in den Figuren **1** bis **4** dargestellten Verstellvorrichtungen **15** und **17** für die Ablagefläche **13** sowie die Tischplatte **16** handelt es sich um manuell bedienbare Klemmvorrichtungen. Die paarweisen Hubeinrichtungen **9a** und **9b** für das Bildwiedergabegerät **3** sowie dessen zum Schwenken um die Achse **12** verwendeten paarweisen Hubeinrichtungen **11a** und **11b** sind motorisch betrieben; sie könnten jedoch auch derart gestaltet werden, daß sie manuell betrieben werden können.

Um einen zwischen dem geschwenkten Bildwiedergabegerät **3** und der Ablagefläche **13** sich bildenden Spalt auszugleichen, durch den ev. Dokumente durchrutschen könnten, kann die Ablagefläche **13** horizontal verschiebbar angeordnet werden. Diese horizontale Verschiebung kann durch eine mechanische, nicht dargestellte Kopplung des Schwenk- und Hebevorgangs des Bildwiedergabegerät automatisch erfolgen.

## Patentansprüche

1. Bildfernsprechkonferenztisch für einen Videokonferenzteilnehmer mit Halteeinrichtungen (**4**, **19**) für wenigstens ein Bildwiedergabe- (**3**), Bildaufnahme- (**20**), Tonwiedergabe- und Tonaufnahmegerät, **gekennzeichnet durch** eine C-förmige, den Konferenzteilnehmer (**2**) teilweise umschließende Tischanordnung (**1a**, **1b**, **1c**), an der die Halteeinrichtungen (**4**, **19**) angeordnet sind.

2. Konferenztisch nach Anspruch 1, **gekennzeichnet durch** wenigstens ein in der Höhe verstellbares Tragelement (**15**, **17**) für wenigstens einen Tischplattenteilbereich (**7**, **13**, **16**) der Tischanordnung (**1a**, **1b**, **1c**).

3. Konferenztisch insbesondere nach Anspruch 1, **dadurch gekennzeichnet**, daß die Halteeinrichtung (**4**) für das Bildwiedergabegerät (**3**) eine Verstelleinrichtung (**9a**, **9b**, **10a**, **10b**) zur Schwenkung und/oder Höhenverstellung aufweist.

4. Konferenztisch nach Anspruch 3, **dadurch gekennzeichnet**, daß das Bildwiedergabegerät (**3**) mit einem transparenten Tischplattenteilbereich (**7**) überdeckt ist, der vom restlichen Tischplattenbereich (**13**) abgetrennt und zusammen mit dem Bildwiedergabegerät (**3**) verstellbar ist.

5. Konferenztisch nach Anspruch 4, **dadurch gekennzeichnet**, daß vor dem das Bildwiedergabegerät (**3**) überdeckenden Tischplattenteilbereich (**7**) eine Ablagefläche (**13**) angeordnet ist, welche bevorzugt in der Höhe verstellbar ist.

6. Konferenztisch nach einem der Ansprüche 1 bis 5, **dadurch gekennzeichnet**, daß die Halteeinrichtung für das Bildwiedergabegerät (**3**) in einem der Schenkel (**1a**) der C-förmigen Tischanordnung (**1a**, **1b**, **1c**) angeordnet ist.

7. Konferenztisch nach Anspruch 6, **dadurch gekennzeichnet**, daß eine elektrische Steuereinrichtung (**25**) im anderen Schenkel (**1c**) der C-förmigen Tischanordnung (**1a**, **1b**, **1c**) angeordnet ist.

8. Konferenztisch nach einem der Ansprüche 1 bis 7, **dadurch gekennzeichnet**, daß die C-förmige Tischanordnung (**1a**, **1b**, **1c**) in einen Mittelteil (**1b**), an den beidseits je ein Schenkelteil (**1a**, **1c**) anschließt, unterteilt ist, wobei alle Tischteile (**1a**, **1b**, **1c**) gegeneinander verschiebbar sind.

9. Konferenztisch nach einem der Ansprüche 1 bis 8, **dadurch gekennzeichnet**, daß die Halteeinrichtung (**19**) für das Bildaufnahmegerät (**20**) am Mittelteil (**1b**) der C-förmigen Tischanordnung (**1a**, **1b**, **1c**) angeordnet und das Bildaufnahmegerät (**20**) mit der Haltevorrichtung schwenkbar und/oder in der Höhe und/oder horizontal verstellbar gehalten ist.
